# FASCICULE DE BREVET EUROPEEN

(11) **EP 3 096 868 B1**
(45) Date de publication et mention de la délivrance du brevet: **06.12.2017**
(21) Numéro de dépôt: 15700748.5
(22) Date de dépôt: 21.01.2015
(51) Int. Cl.: B01J 4/00, B01F 5/04, B01J 19/24

(54) **INSTALLATION DE TRAITEMENT D'UN EFFLUENT AQUEUX PAR OXYDATION HYDROTHERMALE**
VORRICHTUNG ZUR BEHANDLUNG VON ABWÄSSERN DURCH HYDROTHERMALE OXIDATION
FACILITY FOR TREATMENT OF AN AQUEOUS EFFLUENT BY HYDROTHERMAL OXIDATION

(30) Priorité: 21.01.2014 FR 1450476
(43) Date de publication de la demande: 30.11.2016
(73) Titulaire: Innoveox, 75002 Paris (FR)
(72) Inventeur: SARRAIL, Grégoire, F-75002 Paris (FR); SADOSCHENKO, Olivier, F-75002 Paris (FR)
(74) Mandataire: Regimbeau
(86) Numéro de dépôt international: PCT/EP2015/051173
(87) Numéro de publication internationale: WO 2015/110488

(56) Documents cités:
- EP-A1- 0 006 734
- EP-A2- 2 604 335
- FR-A1- 2 970 247
- FR-A5- 2 055 067
- GB-A- 191 115 808
- US-A- 5 591 415
- US-A- 5 888 403
- US-A1- 2011 091 623
- US-A1- 2012 267 286

## Description

### DOMAINE DE L'INVENTION

L'invention concerne un dispositif d'injection d'oxydant pour une installation de traitement d'un effluent aqueux par oxydation hydrothermale, et une installation de traitement associée.

### ETAT DE LA TECHNIQUE

De multiples procédés de traitement d'effluents aqueux comprenant des déchets organiques et/ou des sels dissouts ont été décrits, parmi lesquels on peut en particulier citer ceux dans lesquels on place l'effluent à traiter en présence d'un agent oxydant dans des conditions dites « hydrothermales », ce qui conduit à une oxydation des déchets. En particulier, il est connu de traiter des effluents aqueux à une température et une pression dans lesquelles l'eau se trouve dans un état sous-critique ou supercritique (le point critique de l'eau se situant à une température de 374 degrés Celsius et à une pression de 221 bars).

Dans le cas de composés organiques, le traitement conduit typiquement à une oxydation sous forme de composés simples tels que CO₂ et H₂O. Les sels des métaux autres que les alcalins et alcalino-terreux sont quant à eux typiquement convertis en des (hydr)oxydes métalliques.

Un procédé de ce type, qui s'avère particulièrement intéressant, est décrit dans le document WO 02/20414, qui permet de contrôler l'élévation de température produite lors de l'oxydation hydrothermale. Dans le procédé décrit dans ce document, l'effluent est traité au sein d'un réacteur tubulaire en introduisant l'agent oxydant non pas en une seule fois mais de façon progressive le long du réacteur tubulaire, en plusieurs points d'injection le long du trajet de l'effluent, ce qui permet d'augmenter progressivement la température du flux selon une courbe croissante, d'une température initiale sous-critique (par exemple de l'ordre de l'ambiante ou supérieure) jusqu'à une température supercritique. De cette manière, l'oxydation des composés organiques contenus dans l'effluent est réalisée progressivement au cours de son écoulement et l'énergie thermique produite au cours de la réaction d'oxydation à chaque injection est utilisée pour faire passer progressivement le mélange réactionnel d'un état sous-critique en phase liquide à un état supercritique.

La réaction d'oxydation produit une grande quantité d'énergie thermique dans les zones où la concentration en oxydant est la plus élevée, c'est-à-dire dans les zones d'injection de l'oxydant. L'apparition de ces zones chaudes est susceptible d'endommager les parois du réacteur. Il est donc souhaitable de contrôler cette libération d'énergie thermique.

Par ailleurs, le document US 5,582,715 décrit une installation de traitement d'un effluent aqueux par oxydation hydrothermale comprenant un réacteur tubulaire formant un enroulement circulaire et présentant une pluralité de ports latéraux d'injection, et des buses d'injection d'oxydant s'étendant à travers les ports et permettant d'injecter l'oxydant au centre de l'écoulement.

Cependant, en pratique, de telles buses d'injection ne peuvent pas être obtenues par usinage et leur fabrication est complexe.

### RESUME DE L'INVENTION

Un objectif de l'invention est de proposer une installation qui autorise une injection d'oxydant au coeur de l'écoulement et qui inclut des dispositifs d'injection d'oxydant plus faciles à fabriquer ou à assembler.

Cet objectif est atteint dans le cadre de la présente invention grâce à une installation de traitement d'un effluent aqueux par oxydation hydrothermale, comprenant :
- un réacteur comprenant un tube dans lequel circule l'effluent aqueux à traiter, le tube du réacteur présentant plusieurs coudes formés par des dispositifs d'injection d'oxydant, chaque dispositif d'injection d'oxydant comprenant :
   - une pièce de réacteur formant un canal de circulation d'effluent de forme coudée dans lequel un flux d'effluent aqueux peut circuler, le canal de circulation d'effluent présentant une première partie de canal par laquelle le flux d'effluent pénètre dans la pièce de réacteur et dans laquelle le flux d'effluent circule selon une première direction de circulation et une deuxième partie de canal dans laquelle le flux d'effluent circule selon une deuxième direction de circulation formant un angle non-nul avec la première direction de circulation, et sort de la pièce de réacteur, et
   - une pièce d'injecteur comprenant une première ouverture propre à être raccordée à une source d'oxydant située à l'extérieur du canal de circulation d'effluent, une deuxième ouverture située dans la deuxième partie de canal, et un canal d'injection d'oxydant s'étendant depuis la première ouverture jusqu'à la deuxième ouverture selon une direction parallèle à la deuxième direction de circulation, de manière à injecter l'oxydant dans le flux d'effluent lorsque l'effluent circule dans la deuxième partie de canal, et
- une source d'oxydant raccordée à la pièce d'injecteur pour injecter l'oxydant sous pression à l'intérieur du flux d'effluent aqueux à traiter.

Dans une telle installation, le canal de circulation d'effluent est coudé, ce qui permet de concevoir un dispositif dans lequel la première partie de canal et la deuxième partie de canal sont obtenues par usinage.

De plus, l'invention tire parti de la forme coudée du canal de circulation d'effluent pour prévoir un tube d'injection de forme droite (ou rectiligne) pouvant également être obtenu par usinage.

L'installation peut en outre présenter les caractéristiques suivantes :
- la pièce d'injecteur comprend un tube d'injection s'étendant à l'intérieur du canal de circulation d'effluent sur une distance supérieure à un diamètre du canal de circulation d'effluent,
- le tube d'injection s'étend à l'intérieur du canal de circulation d'effluent sur une distance supérieure à deux fois le diamètre du canal de circulation d'effluent,
- le canal d'injection s'étend de manière coaxiale avec la deuxième partie de canal,
- la pièce de réacteur présente un alésage longitudinal formant la deuxième partie de canal et un alésage latéral formant la première partie de canal, l'alésage latéral débouchant dans l'alésage longitudinal en formant un coude,
- la pièce de réacteur comprend un troisième alésage s'étendant coaxialement avec l'alésage longitudinal, la pièce d'injecteur pénétrant dans la deuxième partie de canal par le troisième alésage,
- la pièce d'injecteur est soudée à la pièce de réacteur,
- la pièce d'injecteur comprend une gorge hélicoïdale formée sur une surface externe de la pièce d'injecteur en contact avec le flux d'effluent pour mettre en rotation le flux d'effluent circulant dans la deuxième partie de canal autour d'un axe de rotation parallèle à la deuxième direction d'écoulement,
- le tube est enroulé en formant plusieurs spires, chaque spire présentant un coude formé par un dispositif d'injection d'oxydant, les coudes étant superposés les uns avec les autres de sorte que les dispositifs d'injections sont regroupés dans une même zone de l'enroulement.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique une installation de traitement conforme à un mode de réalisation de l'invention,
- la figure 2 représente de manière schématique un réacteur faisant partie de l'installation de traitement,
- la figure 3 est une vue en coupe d'un dispositif d'injection d'oxydant conforme à un premier mode de réalisation de l'invention,
- la figure 4 est une vue en coupe d'un dispositif d'injection conforme à un deuxième mode de réalisation de l'invention,
- la figure 5 est une vue en perspective d'une pièce d'injecteur faisant partie du dispositif de la figure 4.

### DESCRIPTION DETAILLEE D'UN MODE DE REALISATION

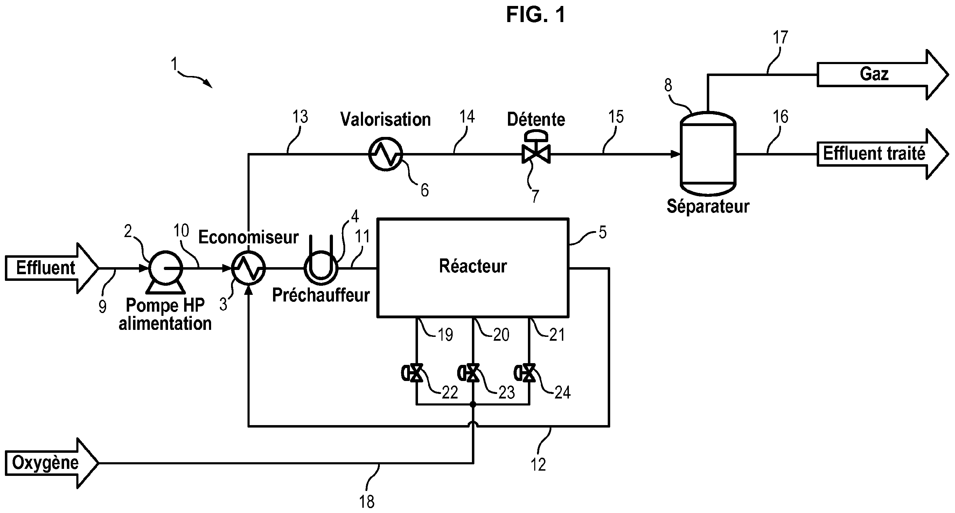

Sur la figure 1, l'installation de traitement 1 représentée comprend une pompe d'alimentation haute pression 2, un échangeur thermique 3, un préchauffeur 4, un réacteur 5, un refroidisseur 6, une vanne de détente 7 et un séparateur 8.

La pompe d'alimentation 2 reçoit en entrée un flux d'effluent à traiter 9 et injecte le flux sous pression 10 vers l'échangeur thermique 3. La pompe d'alimentation 2 fait passer le flux d'effluent à traiter 9 de la pression atmosphérique à une pression par exemple supérieure à 221 bars dans le cas d'un traitement en conditions supercritiques.

Le flux d'effluent sous pression 10 passe dans l'échangeur thermique 3 où il est chauffé. Le flux d'effluent sous pression 10 est chauffé par échange thermique avec un flux d'effluent traité 12 collecté en sortie du réacteur 5. L'échangeur thermique 3 permet ainsi de chauffer l'effluent à traiter 10 à une température comprise par exemple entre 100 et 350 degrés Celsius avant que le flux d'effluent à traiter ne soit introduit dans le réacteur 5.

Le flux d'effluent à traiter 10 passe également dans le préchauffeur 4. Le préchauffeur 4 permet de chauffer le flux d'effluent à traiter 10 avant que celui-ci ne soit introduit dans le réacteur 5. Le préchauffeur n'est activé que pendant une phase transitoire de démarrage du procédé de traitement. En effet, pendant la phase de démarrage, l'échangeur thermique 3 ne permet pas d'assurer un préchauffage suffisant de l'effluent à traiter 10. Une fois que l'installation fonctionne en régime permanent, le préchauffeur 4 n'est plus nécessaire et peut être désactivé. L'échangeur thermique 3 suffit à procurer un chauffage suffisant de l'effluent à traiter 10.

Une fois chauffé, le flux d'effluent à traiter 11 est introduit dans le réacteur 5 pour être traité. Le réacteur 5 reçoit en entrée, d'une part le flux d'effluent à traiter 11, et d'autre part, un flux d'oxygène sous pression 18 nécessaire à la réaction d'oxydation. Plus précisément, le flux d'effluent à traiter 11 circule dans le réacteur 5 et de l'oxygène est injecté à l'intérieur du réacteur, en différents points d'injection 19, 20, 21 le long du trajet du flux d'effluent 11.

Les différents points d'injection 19, 20, 21 sont reliés à un circuit d'alimentation en oxygène pressurisé.

L'installation 1 comprend également un ensemble de vannes 22, 23, 24 pour ajuster la quantité d'oxygène injectée à chaque point d'injection.

L'effluent traité 12 est collecté en sortie du réacteur 5 et est injecté dans l'échangeur thermique 3 pour réchauffer le flux d'effluent à traiter 10 en entrée du réacteur 5. En régime permanent, le flux d'effluent 12 en sortie du réacteur présente une température comprise par exemple entre 500 et 600 degrés Celsius.

Après avoir circulé dans l'échangeur thermique 3, le flux d'effluent traité 13 est envoyé vers le refroidisseur 6 où il est refroidi jusqu'à une température inférieure à 100 degrés Celsius. Le refroidisseur 6 permet de valoriser l'énergie thermique de l'effluent produit en l'utilisant par exemple pour la production d'énergie thermique ou électrique.

Une fois refroidi, l'effluent 14 en sortie du refroidisseur 6 subit une détente grâce à la vanne de détente 7. L'effluent refroidi 15 passe alors sous pression atmosphérique. L'effluent 15 se présente sous la forme d'un mélange de gaz, comprenant notamment du dioxyde de carbone (CO₂), ainsi qu'éventuellement de l'azote (N₂) et de l'oxygène (O₂), et de liquide, le liquide étant essentiellement constitué d'eau ne contenant plus de matière organique.

Le mélange en sortie de la vanne de détente 7 est injecté dans le séparateur 8 afin de séparer la phase gazeuse 17 de la phase liquide 16.

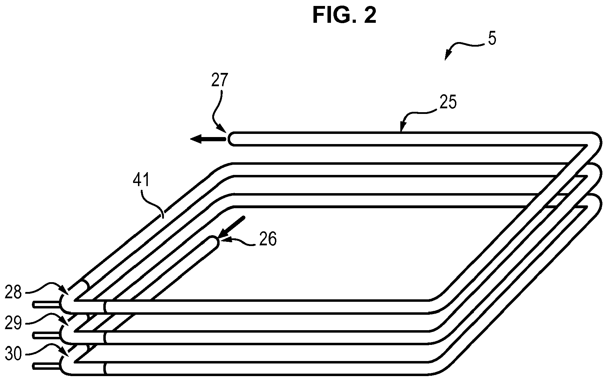

La figure 2 représente de manière schématique le réacteur 5 faisant partie de l'installation de traitement 1.

Le réacteur 5 comprend un tube 25 de forme générale allongée, possédant une entrée 26 et une sortie 27, dans lequel circule le flux d'effluent à traiter. Le tube 25 de circulation de l'effluent à traiter est cylindrique de révolution et est par exemple formé d'un alliage de Nickel et de Chrome.

Le tube 25 de circulation de l'effluent est enroulé sur lui-même en formant plusieurs boucles (ou spires). Chaque boucle présente ici une forme générale rectangulaire. Plus précisément, chaque boucle comprend des tronçons droits reliés entre eux par des coudes.

Sur la figure 2, le tube 25 comprend trois dispositifs d'injection d'oxygène 28 à 30 formant chacun un coude du tube 25 de circulation d'effluent. Les trois dispositifs d'injection d'oxygène 28 à 30 sont identiques entre eux.

Les dispositifs d'injection d'oxygène 28 à 30 sont positionnés les uns au-dessus des autres. Cette disposition permet de regrouper les dispositifs d'injection 28 à 30 dans une même zone de l'installation, ce qui autorise un raccordement des trois dispositifs d'injection d'oxygène à un même circuit d'alimentation en oxygène pressurisé et selon une même direction de raccordement. Cela a pour avantage de faciliter la maintenance de l'installation.

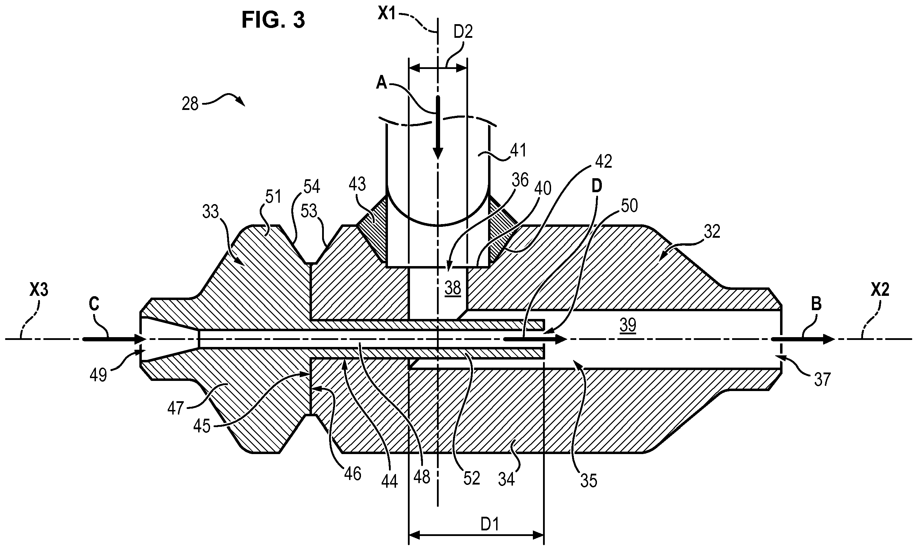

La figure 3 représente un dispositif d'injection d'oxygène 28 conforme à un premier mode de réalisation de l'invention.

Le dispositif d'injection d'oxygène 28 comprend une pièce de réacteur 32 et une pièce d'injecteur 33.

La pièce de réacteur 32 comprend un corps 34 formé en une pièce unique de matériau, par exemple en alliage de Nickel et de Chrome.

La pièce de réacteur 32 comprend un canal 35 de circulation d'effluent formé dans le corps 34 et dans lequel le flux d'effluent aqueux peut circuler. Le canal 35 de circulation d'effluent s'étend depuis une première ouverture 36 par laquelle le flux d'effluent pénètre dans la pièce de réacteur (flèche A), jusqu'à une deuxième ouverture 37 par laquelle le flux d'effluent sort de la pièce de réacteur (flèche B).

Le canal de circulation d'effluent 35 présente une forme coudée. Plus précisément, le canal de circulation d'effluent 35 présente une première partie de canal 38 s'étendant selon une première direction d'axe X1 et une deuxième partie de canal 39 s'étendant selon une deuxième direction d'axe X2, l'axe X2 formant un angle droit avec l'axe X1. La première partie de canal 38 s'étend à partir de la première ouverture 36 jusqu'à la deuxième partie de canal 39. La deuxième partie de canal 39 s'étend depuis la première partie de canal 38 jusqu'à la deuxième ouverture 37.

La première partie de canal 38 présente une forme cylindrique de révolution ayant comme axe de révolution l'axe X1. La deuxième partie de canal 39 présente une forme cylindrique de révolution ayant comme axe de révolution l'axe X2. Chacune des deux parties de canal 38 et 39 présente une section circulaire, ayant des diamètres internes identiques.

En pratique, la deuxième partie de canal 39 a été obtenue par un alésage longitudinal selon l'axe X2 du corps 34 de la pièce de réacteur 32. La première partie de canal 38 a été obtenu par un alésage latéral selon l'axe X1 du corps 34 de la pièce de réacteur 32, l'alésage latéral débouchant dans l'alésage longitudinal de manière à former le coude.

La pièce de réacteur 32 présente en outre une première surface d'appui 40 formée par un épaulement, entourant la première ouverture 36, et propre à être mise en contact avec une extrémité d'un tronçon droit 41 de tube de réacteur 25 pour raccorder le tronçon droit 41 à la pièce de réacteur 32.

La pièce de réacteur 32 comprend en outre une surface conique 42 formée par un chanfrein entourant la surface d'appui 40. La surface conique 42 défini avec une surface externe du tronçon droit 41 de tube une gorge propre à recevoir un cordon de soudure 43, de manière à fixer le tronçon droit 41 de tube sur la pièce de réacteur 32 et à obtenir un contact étanche entre les deux pièces 32 et 41.

De cette manière, la première ouverture 36 de la pièce de réacteur 32 est raccordée à un premier tronçon droit 41 de tube tandis que la deuxième ouverture 37 est raccordée à un deuxième tronçon droit de tube (non-représenté), le deuxième tronçon droit de tube formant un angle droit avec le premier tronçon droit de tube.

Par ailleurs, la pièce de réacteur 32 comprend une troisième ouverture 44 pour l'injection d'oxygène dans l'effluent à traiter circulant dans le canal 35.

La troisième ouverture 44 est obtenue par alésage du corps 34 selon la direction longitudinale d'axe X1.

Dans ce premier mode de réalisation, la troisième ouverture 44 présente un diamètre inférieur au diamètre de la deuxième partie de canal 39.

La pièce de réacteur 32 présente une deuxième surface d'appui 45, entourant la troisième ouverture 44, la deuxième surface d'appui 45 étant propre à être mise en contact avec une surface d'appui 46 de la pièce d'injecteur 33 pour raccorder la pièce d'injecteur 33 à la pièce de réacteur 32.

La pièce d'injecteur 33 comprend un corps 47 formé en une pièce unique de matériau, par exemple en alliage de Nickel et de Chrome, et un canal d'injection d'oxygène 48 s'étendant à travers le corps 47. La pièce d'injecteur 33 comprend une première ouverture 49 destinée à être raccordée à un circuit d'alimentation en oxygène pressurisé et une deuxième ouverture 50 par laquelle l'oxygène est libéré dans l'effluent à traiter. Le canal d'injection d'oxygène 48 présente une forme rectiligne selon un axe X3. Le canal d'injection d'oxygène 48 s'étend depuis la première ouverture 49 par laquelle le flux d'oxygène pénètre dans la pièce d'injecteur (flèche C), jusqu'à la deuxième ouverture 50 par laquelle le flux d'oxygène sort de la pièce d'injecteur (flèche D)

Par ailleurs, le corps 47 présente une partie de raccordement 51 s'étendant à l'extérieur de la pièce de réacteur 32 et destinée à être raccordée à un circuit d'alimentation en oxygène pressurisé, et une partie s'étendant à l'intérieur de la pièce de réacteur 32 en formant un tube d'injection d'oxygène 52 pour injecter l'oxygène pressurisé dans l'effluent à traiter.

La partie de raccordement 51 et le tube d'injection d'oxygène 52 sont formés par usinage du corps 47. En particulier, le canal d'injection 48 est formé par un alésage à travers le corps 47 selon l'axe X3.

Le tube d'injection d'oxygène 52 présente une forme cylindrique de révolution ayant pour axe de révolution l'axe X3. Le tube d'injection d'oxygène 52 est disposé à travers le corps 34 de la pièce de réacteur 32, par la troisième ouverture 44 jusqu'à l'intérieur de la deuxième partie de canal 39, de sorte que l'axe X3 du tube d'injection d'oxygène 52 est confondu avec le deuxième axe X2 de la deuxième partie de canal 39.

De plus, le tube d'injection d'oxygène 52 est orienté de sorte qu'un flux d'oxygène est injecté dans la deuxième partie de canal 39 dans une direction et un sens d'injection (flèche D) identiques à la direction et au sens de circulation de l'effluent à traiter dans la deuxième partie de canal (flèche B).

Par ailleurs, le tube d'injection d'oxygène 52 s'étend à l'intérieur du canal de circulation d'effluent 35 sur une distance D1 supérieure à une fois le diamètre D2 du canal de circulation d'effluent 35, de préférence deux fois le diamètre du canal de circulation d'effluent 35. Par exemple, le tube d'injection d'oxygène 52 s'étend à l'intérieur du canal de circulation d'effluent 35 sur une distance égale à 36 millimètres.

De cette manière, l'oxygène injecté dans le flux d'effluent à traiter est confiné au centre du tube 25 du réacteur 5, ce qui limite le risque d'endommagement des parois du réacteur 5.

La partie de raccordement 51 de la pièce d'injecteur 33 présente une surface d'appui 46 s'étendant transversalement à l'axe X3 et propre à être mise en contact avec la surface d'appui 45 de la pièce de réacteur 32 pour raccorder la pièce d'injecteur 33 à la pièce de réacteur 32.

De plus, la pièce de réacteur 32 et la pièce d'injecteur 33 présentent chacune une surface conique 53, 54 formée par chanfrein, les surfaces coniques 53 et 54 étant agencés de sorte que lorsque les deux pièces 32 et 33 sont mises en contact l'une avec l'autre, les surfaces coniques 53 et 54 forment une gorge ayant une section en V, la gorge permettant la formation d'un cordon de soudure pour fixer les deux pièces entre elles.

En fonctionnement, un flux d'effluent à traiter circule dans le canal coudé 35 de la pièce de réacteur 32. Le flux d'effluent à traiter pénètre par la première ouverture 36, circule dans la première partie de canal 38 selon une première direction de circulation (parallèle à l'axe X1), puis circule dans la deuxième partie de canal 39 selon une deuxième direction de circulation (parallèle à l'axe X2) et sort de la pièce de réacteur 32 par la deuxième ouverture 37. De l'oxygène sous pression est injecté par le tube d'injection 52 au centre du flux d'effluent, alors que le flux d'effluent circule dans la deuxième partie du canal 39.

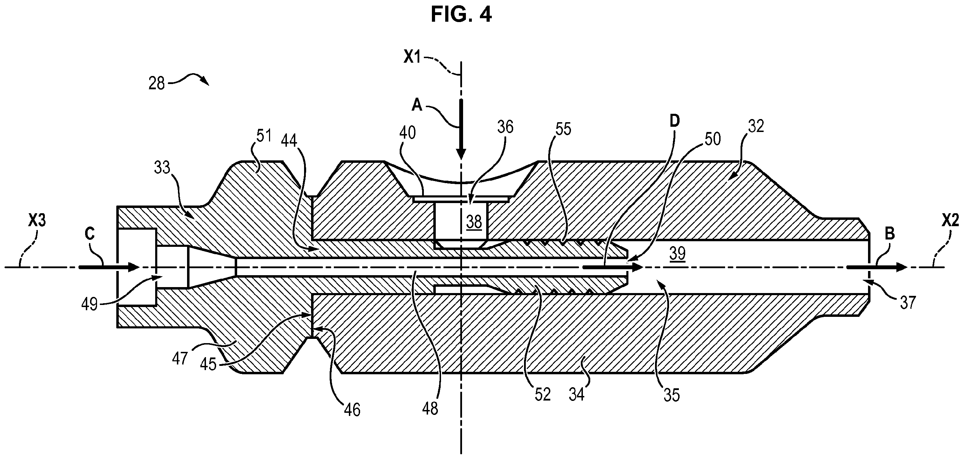

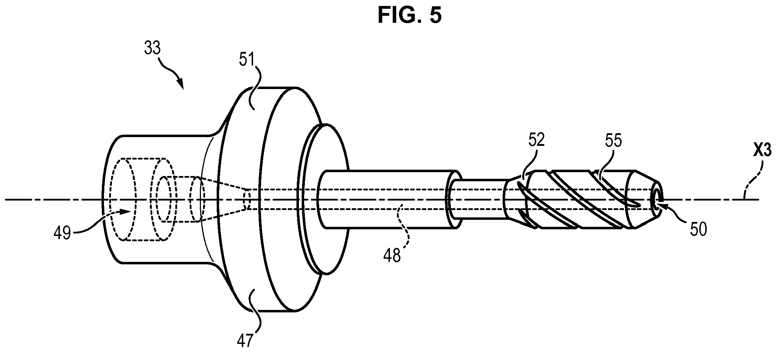

Les figures 4 et 5 représentent de manière schématique un dispositif d'injection d'oxygène 28 conforme à un deuxième mode de réalisation de l'invention.

Le dispositif d'injection d'oxygène 28 représenté sur les figures 4 et 5 est identique au dispositif d'injection 28 de la figure 3, excepté que le tube d'injection d'oxygène 52 présente une gorge hélicoïdale 55 ménagée sur sa surface externe.

La présence de la gorge hélicoïdale 55 a pour effet de mettre en rotation le flux d'effluent circulant dans la deuxième partie de canal 39 autour de l'axe X2, parallèle à la deuxième direction d'écoulement.

La mise en rotation du flux d'effluent crée un tourbillon qui contribue à confiner l'oxygène injecté par le tube d'injection d'oxygène 52 au centre du flux d'effluent.

Par ailleurs, le tube d'injection d'oxygène 52 présente une partie renflée 56 présentant un diamètre externe identique au diamètre interne de la deuxième partie de canal 39, et la gorge hélicoïdale 55 est formée dans la surface externe de la partie renflée 56, de sorte que le flux d'effluent est forcé de passer dans la gorge hélicoïdale 55 lorsqu'il circule dans la deuxième partie de canal 39.

## Revendications

1. Installation de traitement d'un effluent aqueux par oxydation hydrothermale, comprenant :
• un réacteur (5) comprenant un tube (25) dans lequel circule l'effluent aqueux à traiter, le tube (25) du réacteur présentant plusieurs coudes formés par des dispositifs d'injection d'oxydant (28-30), chaque dispositif d'injection d'oxydant (28-30) comprenant :
- une pièce de réacteur (32) formant un canal de circulation d'effluent (35) de forme coudée dans lequel un flux d'effluent aqueux peut circuler, le canal de circulation d'effluent (35) présentant une première partie de canal (38) par laquelle le flux d'effluent pénètre dans la pièce de réacteur (32) et dans laquelle le flux d'effluent circule selon une première direction de circulation (X1) et une deuxième partie de canal (39) dans laquelle le flux d'effluent circule selon une deuxième direction de circulation (X2) formant un angle non-nul avec la première direction de circulation, et sort de la pièce de réacteur (32), et
- une pièce d'injecteur (33) comprenant une première ouverture (49) propre à être raccordée à une source d'oxydant située à l'extérieur du canal de circulation d'effluent (35), une deuxième ouverture (50) située dans la deuxième partie de canal (39), et un canal d'injection d'oxydant (48) s'étendant depuis la première ouverture (49) jusqu'à la deuxième ouverture (50) selon une direction parallèle à la deuxième direction de circulation, de manière à injecter l'oxydant dans le flux d'effluent lorsque l'effluent circule dans la deuxième partie de canal (39), et
• une source d'oxydant raccordée à la pièce d'injecteur (33) pour injecter l'oxydant sous pression à l'intérieur du flux d'effluent aqueux à traiter.

2. Installation selon la revendication 1, dans laquelle la pièce d'injecteur (33) comprend un tube d'injection (52) s'étendant à l'intérieur du canal de circulation d'effluent (35) sur une distance (D1) supérieure à un diamètre (D2) du canal de circulation d'effluent (35).

3. Installation selon la revendication 2, dans laquelle le tube d'injection (52) s'étend à l'intérieur du canal de circulation d'effluent (35) sur une distance (D1) supérieure à deux fois le diamètre (D2) du canal de circulation d'effluent (35).

4. Installation selon l'une des revendications 1 à 3, dans laquelle le canal d'injection d'oxydant (52) s'étend de manière coaxiale avec la deuxième partie de canal (39).

5. Installation selon l'une des revendications 1 à 4, dans laquelle la pièce de réacteur (32) présente un alésage longitudinal formant la deuxième partie de canal (39) et un alésage latéral formant la première partie de canal (38), l'alésage latéral débouchant dans l'alésage longitudinal en formant un coude.

6. Installation selon la revendication 5, dans laquelle la pièce de réacteur (32) comprend un troisième alésage s'étendant coaxialement avec l'alésage longitudinal, la pièce d'injecteur (33) pénètrant dans la deuxième partie de canal (39) par le troisième alésage.

7. Installation selon l'une des revendications 1 à 6, dans laquelle la pièce d'injecteur (33) est soudée à la pièce de réacteur (32).

8. Installation selon l'une des revendications 1 à 7, dans laquelle la pièce d'injecteur (33) comprend une gorge hélicoïdale (55) formée sur une surface externe de la pièce d'injecteur (33), en contact avec le flux d'effluent pour mettre en rotation le flux d'effluent circulant dans la deuxième partie de canal (39) autour d'un axe de rotation (X3) parallèle à la deuxième direction d'écoulement (X2).

9. Installation selon l'une des revendications 1 à 8, dans laquelle le tube (25) est enroulé en formant plusieurs spires, chaque spire présentant un coude formé par un dispositif (28, 31) d'injection d'oxydant, les coudes étant superposés les uns avec les autres de sorte que les dispositifs d'injections sont regroupés dans une même zone de l'enroulement.

## Patentansprüche

1. Anlage zur Behandlung von Abwässern durch hydrothermale Oxidation, umfassend:
• einen Reaktor (5), umfassend ein Rohr (25), in dem die zu behandelnden Abwässer zirkulieren, wobei das Rohr (25) des Reaktors mehrere Knie aufweist, die von Oxidansinjektionsvorrichtungen (28-30) gebildet sind, wobei jede Oxidansinjektionsvorrichtung (28-30) umfasst:
- ein Reaktorteil (32), das einen Abwasserzirkulationskanal (35) gekrümmter Form bildet, in dem ein wässriger Abwasserstrom zirkulieren kann, wobei der Abwasserzirkulationskanal (35) einen ersten Kanalteil (38) aufweist, durch den der Abwasserstrom in das Reaktorteil (32) eindringt und in dem der Abwasserstrom in einer ersten Zirkulationsrichtung (X1) fließt, und einen zweiten Kanalteil (39), in dem der Abwasserstrom in einer zweiten Zirkulationsrichtung (X2) fließt, der mit der ersten Zirkulationsrichtung einen Winkel ungleich Null bildet, und aus dem Reaktorteil (32) austritt, und
- ein Injektorteil (33), umfassend eine erste Öffnung (49), die imstande ist, mit einer Oxidansquelle verbunden zu sein, die sich außerhalb des Abwasserzirkulationskanals (35) befindet, eine zweite Öffnung (50), die sich im zweiten Kanalteil (39) befindet, und einen Oxidansinjektionskanal (48), der sich von der ersten Öffnung (49) bis zur zweiten Öffnung (50) in einer zur zweiten Zirkulationsrichtung parallelen Richtung derart erstreckt, dass das Oxidans in den Abwasserstrom eingeleitet wird, wenn das Abwasser im zweiten Kanalteil (39) zirkuliert, und
• eine Oxidansquelle, die mit dem Injektorteil (33) verbunden ist, um das Oxidans unter Druck in den wässrigen Abwasserstrom einzuleiten.

2. Anlage nach Anspruch 1, wobei das Injektorteil (33) ein Injektionsrohr (52) umfasst, das sich im Abwasserzirkulationskanal (35) über eine Distanz (D1) erstreckt, die größer als ein Durchmesser (D2) des Abwasserzirkulationskanals (35) ist.

3. Anlage nach Anspruch 2, wobei sich das Injektionsrohr (52) im Abwasserzirkulationskanal (35) über eine Distanz (D1) erstreckt, die zweimal größer als der Durchmesser (D2) des Abwasserzirkulationskanals (35) ist.

4. Anlage nach einem der Ansprüche 1 bis 3, wobei sich der Oxidansinjektionskanal (52) koaxial zum zweiten Kanalteil (39) erstreckt.

5. Anlage nach einem der Ansprüche 1 bis 4, wobei das Reaktorteil (32) eine Längsbohrung aufweist, die den zweiten Kanalteil (39) bildet, und eine Seitenbohrung, die den ersten Kanalteil (38) bildet, wobei die Seitenbohrung bei Formung eines Knies in die Längsbohrung ausmündet.

6. Anlage nach Anspruch 5, wobei das Reaktorteil (32) eine dritte Bohrung umfasst, die sich koaxial zur Längsbohrung erstreckt, wobei das Injektorteil (33) in den zweiten Kanalteil (39) über die dritte Bohrung eindringt.

7. Anlage nach einem der Ansprüche 1 bis 6, wobei das Injektorteil (33) mit dem Reaktorteil (32) verschweißt ist.

8. Anlage nach einem der Ansprüche 1 bis 7, wobei das Injektorteil (33) eine schraubenförmige Nut (55), die auf einer äußeren Fläche des Injektorteils (33) ausgebildet ist, im Kontakt mit dem Abwasserstrom umfasst, um den Abwasserstrom, der im zweiten Kanalteil (39) zirkuliert, um eine Rotationsachse (X3), die zur zweiten Fließrichtung (X2) parallel ist, in Rotation zu versetzen.

9. Anlage nach einem der Ansprüche 1 bis 8, wobei das Rohr (25) gewickelt ist und dabei mehrere Windungen bildet, wobei jede Windung ein Knie aufweist, das von einer Oxidansinjektionsvorrichtung (28, 31) gebildet ist, wobei die Knie derart übereinanderliegen, dass die Injektionsvorrichtungen in einer selben Wickelzone gruppiert sind.

## Claims

1. A facility for treating an aqueous effluent by hydrothermal oxidation, comprising:
• a reactor (5) comprising a tube (25) in which the aqueous effluent to be treated circulates, the tube (25) of the reactor having several bends formed by oxidant injection devices (28-30), each oxidant injection device (28-30) comprising:
- a reactor part (32) forming an effluent circulation channel (35) with a bent shape in which an aqueous effluent flow can circulate, the effluent circulation channel (35) having a first channel portion (38) through which the effluent flow enters into the reactor part (32) and in which the effluent flow circulates in a first circulation direction (X1) and a second channel portion (39) in which the effluent flow circulates in a second circulation direction (X2) forming a nonzero angle with the first circulation direction, and leaves the reactor part (32), and
- an injector part (33) comprising a first opening (49) suitable for being connected to an oxidant source located outside the effluent circulation channel (35), a second opening (50) located in the second channel portion (39) and an oxidant injection channel (48) extending from the first opening (49) to the second opening (50) in a direction parallel to the second circulation direction, so as to inject the oxidant in the effluent flow when the effluent is circulating in the second channel portion (39), and
• an oxidant source connected to the injector part (33) to inject the oxidant under pressure inside the aqueous effluent flow to be treated.

2. The facility according to claim 1, wherein the injector part (33) comprises an injection tube (52) extending inside the effluent circulation channel (35) over a distance (D1) greater than a diameter (D2) of the effluent circulation channel (35).

3. The facility according to claim 2, wherein the injection tube (52) extends inside the effluent circulation channel (35) over a distance (D1) greater than twice the diameter (D2) of the effluent circulation channel (35).

4. The facility according to one of claims 1 to 3, wherein the oxidant injection channel (52) extends coaxially with the second channel portion (39).

5. The facility according to one of claims 1 to 4, wherein the reactor part (32) has a longitudinal bore forming the second channel portion (39) and a side bore forming the first channel portion (38), the side bore leading into the longitudinal bore while forming a bend.

6. The facility according to claim 5, wherein the reactor part (32) comprises a third bore extending coaxially with the longitudinal bore, the injector part (33) entering the second channel portion (39) through the third bore.

7. The facility according to one of claims 1 to 6, wherein the injector part (33) is welded to the reactor part (32).

8. The facility according to one of claims 1 to 7, wherein the injector part (33) comprises a helical groove (55) formed on an outer surface of the injector part (33), in contact with the effluent flow to put into rotation the effluent flow circulating in the second channel portion (39) around an axis of rotation (X3) parallel to the second flow direction (X2).

9. The facility according to one of claims 1 to 8, wherein the tube (25) is coiled to form several turns, each turn having a bend formed by an oxidant injection device (28, 31), the bends being superimposed one on the other so that the injection devices are grouped in the same zone of the coil.
